# EUROPÄISCHE PATENTSCHRIFT

(11) **EP 2 421 672 B1**
(45) Veröffentlichungstag und Bekanntmachung des Hinweises auf die Patenterteilung: **03.06.2015**
(21) Anmeldenummer: 10722539.3
(22) Anmeldetag: 19.03.2010
(51) Int. Cl.: B23B 51/02

(54) **ROTIERENDES WERKZEUG ZUR SPANABTRAGENDEN BEARBEITUNG**
ROTATING TOOL FOR CHIP REMOVING MACHINING
OUTIL POUR USINAGE ROTATIF AVEC ENLÈVEMENT DE COPEAUX

(30) Priorität: 20.03.2009 DE 102009013737
(43) Veröffentlichungstag der Anmeldung: 29.02.2012
(73) Patentinhaber: Gühring OHG, 72458 Albstadt (DE)
(72) Erfinder: ALBER, Roland, 72475 Bitz (DE)
(74) Vertreter: Meitinger, Thomas Heinz
(86) Internationale Anmeldenummer: PCT/DE2010/000306
(87) Internationale Veröffentlichungsnummer: WO 2010/105611

(56) Entgegenhaltungen:
- EP-A2- 1 396 303
- DE-A1- 4 417 166
- US-A- 3 977 807
- US-A- 5 273 380
- US-A1- 2003 017 015

## Beschreibung

Es wird ein Werkzeug zur spanabtragenden rotierenden Bearbeitung nach dem Oberbegriff des Anspruchs 1 vorgeschlagen . Ein Werkzeug mit solchen Merkmalen ist z.B. aus der DE 44 17 166 bekannt.

### Stand der Technik

Aus der deutschen Gebrauchsmusterschrift DE 20 2008 006 036 U1 ist ein zylindrisches Bohrwerkzeug mit zwei oder mehr wendelartigen Schneiden bekannt. Am Übergang von jeder Schneidkante dieser Schneiden zur zugeordneten Freifläche ist jeweils eine Führungsfase vorgesehen, der in der Gegenschneidrichtung wenigstens zwei weitere Führungsfasen beabstandet folgen. Im Zwischenraum zwischen den Führungsfasen ist jeweils eine radiale Vertiefung ausgebildet, wobei der radiale Abstand jeder Führungsfase zur Längsmittelachse dem Schneidradius entspricht.

Durch wenigstens drei Führungsfasen pro Schneide wird erreicht, dass das Bohrwerkzeug sehr viel stabiler bereits in der Anbohrphase seine Fluchtgenauigkeit einhält.

### Aufgabe und Vorteile der Erfindung

Der Erfindung liegt die Aufgabe zugrunde, ein Werkzeug zur spanabtragenden rotierenden Bearbeitung der einleitend bezeichneten Art im Hinblick auf die Bearbeitungseigenschaften zu verbessern.

Diese Aufgabe wird durch die Merkmale des Anspruchs 1 gelöst.

In den abhängigen Ansprüchen sind vorteilhafte und zweckmäßige Weiterbildungen der Erfindung angegeben.

Die Erfindung geht von einem Werkzeug zur spanabtragenden rotierenden Bearbeitung mit einem Grundkörper aus, an welchem wenigstens eine Hauptschneide in einem Stirnbereich und wenigstens eine Nebenschneide entlang einer Längsachse an einem äußeren Umfang des Grundkörpers vorgesehen ist, vor welcher in Schneidrichtung eine Spannut liegt, und wobei in einer Gegenschneidrichtung hinter der Nebenschneide bis zu einer weiteren Spannut wenigstens zwei Führungsfasen folgen, die insbesondere auf einem radialen Abstand zu einer Längsmittelachse liegen, der dem Schneidradius der wenigstens einen Nebenschneide entspricht. Wenigstens eine der wenigstens zwei Führungsfasen ist vom Stirnbereich des Werkzeugs aus betrachtet, nicht durchgehend von einem Übergangsbereich Stirnbereich/Umfangsbereich entlang der Längsachse ausgebildet, sondern zwischen dem Übergangsbereich und einem weiteren Verlauf eine Freistelle bzw. Lücke in der Führungsfase vorhanden ist.

Beispielsweise sind hinter einer Nebenschneide zwei Führungsfasen angeordnet. Erfindungsgemäß beginnt die zweite Führungsfase aber erst nach einem Abstand vom Übergang Stirnfläche/Umfangsfläche des Werkzeugs aus betrachtet entlang der Längsachse des Werkzeugs, womit erst nach diesem Abstand zwei Führungsfasen entlang der Längsachse vorhanden sind.

Mehrere Führungsfasen bringen zwar die erhöhte Führung und Fluchtgenauigkeit, vergrößern jedoch auch die Reibung des Werkzeugs, insbesondere eines Bohrwerkzeugs. Es hat sich herausgestellt, dass beim "Anbohren" eine verminderte Reibung durch gegebenenfalls nur eine Führungsfase größere Vorteile mit sich bringt als ein zusätzlicher Führungsvorteil. Erst in einem weiteren Verlauf kommt dann die wenigstens zweite Führungsfase für eine verbesserte Führung und Streifigkeit des Werkzeugs zum Tragen. Die verminderte Reibung hat auch eine geringere Erwärmung des Werkzeugs zur Folge, was im vorderen Bereich des Werkzeugs Vorteile mit sich bringt.

Es ist es denkbar, dass die Freistelle im Verlauf der Führungsfase, die an einem radialen Rand des Stirnbereichs ansetzt, positioniert ist, so dass im vordersten Bereich zwei, gegebenenfalls mehr Führungsfasen nach einer Nebenschneide ausgebildet sind, dann eine Lücke einer Führungsfase vorhanden ist. Damit ist in diesem Bereich nach der Nebenschneide entgegen einer Schneidrichtung eine Führungsfase weniger realisiert ist.

Erfindungsgemäß ist eine Länge der Freistelle größer als ein halber Durchmesser, vorzugsweise ein Durchmesser des Werkzeugs. Ein spürbarer Effekt für das Weglassen einer wenigstens zweiten Führungsfase ist ab einer Länge der Freistelle von einem halben Durchmesser feststellbar.

Es ist auch denkbar, dass die Freistelle größer ist, zum Beispiel, deren Länge 1,5 Durchmesser übersteigt oder sogar größer als 2 Durchmesser ist.

In einer ebenfalls bevorzugten Ausgestaltung der Erfindung ist im Bereich der Freistelle der wenigstens einen Führungsfase zumindest eine andere Führungsfase entlang der Längsachse vorhanden. Damit wird sicher gestellt, dass auch in der Lücke eine Führung des Werkzeugs gegeben ist.

Vorzugsweise ist in einem Bereich, in welchem wenigstens zwei Führungsfasen entlang der Längsachse des Werkzeugs vorgesehen sind, ein paralleler Verlauf der Führungsfasen realisiert. Denkbar ist aber auch ein vom parallelen Verlauf abweichender Verlauf, der sich zum Beispiel daraus ergibt, dass sich das Werkzeug von der Spitze aus betrachtet zu einem Schaftbereich hin verjüngt.

Gemäß der Erfindung ist in Umfangsrichtung betrachtet, eine erste Führüngsfase nach der Nebenschneide breiter als eine darauf folgende Führüngsfase. Die erste Führungsfase nach der Nebenschneide läuft vorzugsweise bis an den Stirnbereich des Werkzeugs durch, wogegen eine darauf folgende Führungsfase eine Freistelle oder Lücke besitzt. Die Hauptführungswirkung kann von der ersten Führungsfase bereit gestellt werden, so dass eine darauf folgende zweite Führungsfase schmaler ausfallen kann.

In einer bevorzugten Ausgestaltung der Erfindung beginnt wenigstens eine Führungsfase an einem Ende der Hauptschneide.

Außerdem möglich ist eine Veränderung der Breite einer Führungsfase entlang des Verlaufs am Werkzeug von der Spitze in einen Schaftbereich. Denkbar ist ein vergleichsweise schmaler Beginn der Führungsfase im vorderen Bereich des Werkzeugs, wobei sich die Führungsfase zum Schaft hin verbreitert und somit eine verstärkte Führungsunterstützung bieten kann.

Beispielsweise beginnt am Übergang einer Freifläche hinter einer Hauptschneide eine Führungsfase in der gleichen Breite wie die erste Freifläche hinter der Hauptschneide und wird dann allmählich breiter in Richtung eines Schaftbereichs des Werkzeugs.

Um einen gleichmäßigen Lauf eines Werkzeugs zu begünstigen, wird im Weiteren vorgeschlagen, dass die wenigstens eine Führungsfase nach der Freistelle über eine Schrägfläche bezogen auf eine Ebene senkrecht zur Längsmittelachse des Werkzeugs beginnt. Bevorzugt ist somit sozusagen ein allmählicher Anlauf oder Beginn einer Führungsfase nach einer Freistelle bzw. Lücke.

Eine erfindungsgemäße Ausgestaltung wird vorzugsweise bei Bohrwerkzeugen realisiert. Denkbar ist eine entsprechende Realisierung an zwei- oder dreischneidigen Bohrwerkzeugen, so dass bei einem zweischneidigen Bohrwerkzeug zum Beispiel im vorderen Bereich insgesamt zwei Führungsfasen vorhanden sind, d.h. nach jeder Nebenschneide eine Führungsfase ausgebildet ist, und im weiteren Verlauf jeweils eine weitere Führungsfasen hinzukommt. Bei einem dreischneidigen Werkzeug mit gleichem Gestaltungsprinzip sind dann zunächst drei Führungsfasen im vorderen Bereich ausgebildet. In einem Bereich, in welchem die weiteren Führungsfasen keine Freistelle mehr aufweisen, sinn dann sechs Führungsfasen vorhanden.

Denkbar ist auch eine unterschiedliche Länge von Freistellen innerhalb einer jeweiligen Führungsfase.

Unterschiedlich kann auch der Start und der Beginn einer Freistelle innerhalb einer Führungsfase realisiert werden.

### Ausführungsbeispiel

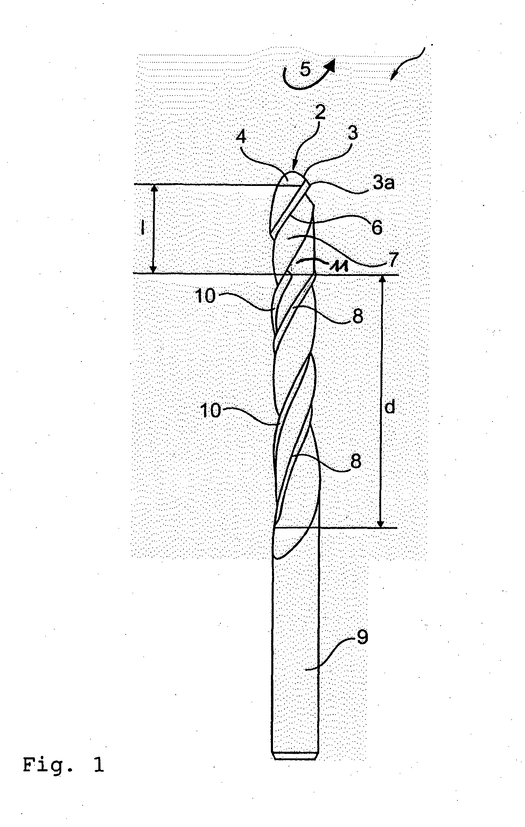

Ein Ausführungsbeispiel der Erfindung ist in der Zeichnung dargestellt und wird nachstehend unter Angabe von weiteren Einzelheiten und Vorteilen näher erläutert. Die Figur zeigt ein erfindungsgemäßes Bohrwerkzeug in einer schematischen Seitenansicht.

Das Bohrwerkzeug gemäß der Figur ist ein zweischneidiger Spiralbohrer 1 mit einer Bohrerspitze 2, jeweils einer Haüptschneide 3 mit daran anschließende Freifläche 4 entgegen einer Schneidrichtung 5 (durch Pfeil in der Figur symbolisiert).

An einem radial äußeren Ende jeder Hauptschneide 3 setzt entlang eines Umfangs des Spiralbohrers 1 eine Nebenschneide 6 an. Somit sind zwei Nebenschneiden 6 ausgebildet. Vor jeder Nebenschneide 6 befindet sich eine Spannut 7. Die Nebenschneiden 6 und Spannuten 7 verlaufen entlang einer Achse des Spiralbohrers 1 spiralförmig.

Hinter jeder Nebenschneide 6 entgegen der Schneidrichtung 5 schließt sich eine erste Führungsfase 8 an, die am radial äußeren Ende der Freifläche 4 am Übergang zum Umfangsbereich beginnt und bis in einen Schaftbereich 9 durchgehend verläuft.

In Schneidrichtung 5 hinter der ersten Führungsfasen 8 ist eine zweite Führungsfase 10 ausgebildet. Die zweite Führungsfäse 10 beginnt jedoch nicht unmittelbar am radial äußeren Ende eines Stirnbereichs, wenn dieser in den Umfangsbereich des Spiralbohrers 1 übergeht, sondern erst nach einer Länge 1 ab diesem Übergangsbereich in Längsrichtung des Spiralbohrers 1. Damit besteht eine Freistelle 11 mit der Länge 1. Die Länge 1 ist vorzugsweise größer als ein Durchmesser, gegebenenfalls größer als der 2-fache Durchmesser des Spiralbohrers 1. Ab dem Bereich 1 schließt sich ein Bereich d entlang der Längsachse des Spiralbohrers 1 an, im welchem eine doppelte Führungsfase ausgebildet ist.

In diesem Bereich besitzt der Spiralbohrer 1 die volle Längsführungseigenschaft.

### Bezugszeichenliste:

- 1: Werkzeug
- 2: Bohrerspitze
- 3: Hauptschneide
- 3a: Ende
- 4: Freifläche
- 5: Schneidrichtung
- 6: Nebenschneide
- 7: Spannut
- 8: erste Führungsfase
- 9: Schaftbereich
- 10: zweite Führungsfase
- 11: Freistelle

## Patentansprüche

1. Werkzeug (1) zur spanabtragenden, rotierenden Bearbeitung mit einem Grundkörper, an welchem wenigstens eine Hauptschneide (3) in einem Stirnbereich und wenigstens eine Nebenschneide (6) entlang einer Längsachse an einem äußeren Umfang des Grundkörpers vorgesehen ist, vor welcher in Schneidrichtung eine Spannut (7) liegt, und wobei in einer Gegenschneidrichtung hinter der Nebenschneide (6) bis zu einer weiteren Spannut (7) wenigstens zwei Führungsfasen (8, 10) folgen, wobei wenigstens eine Führungsfase (10) der wenigstens zwei Führungsfasen (8, 10) vom Stirnbereich des Werkzeugs aus betrachtet nicht durchgehend von einem Übergangsbereich vom Stirnbereich zu einem Umfangsbereich entlang der Längsachse ausgebildet ist, sondern zwischen dem Übergangsbereich und einem weiteren Verlauf eine Freistelle (11) in der Führungsfase vorhanden ist, in welcher die wenigstens eine Führungsfase nicht ausgebildet ist, **dadurch gekennzeichnet, dass** eine Länge 1 der Freistelle (11) größer als ein halber Durchmesser, vorzugsweise größer als ein Durchmesser des Werkzeugs (1) ist, wobei in Umfangsrichtung betrachtet eine erste Führungsfase (8) nach der Nebenschneide (6) breiter ist als eine darauffolgende Führungsfase (10).

2. Werkzeug nach einem der vorhergehenden Ansprüche, **dadurch gekennzeichnet, dass** eine Länge 1 der Freistelle (11) größer als der 1,5-fache Durchmesser, vorzugsweise der zweifache Durchmesser des Werkzeugs (1) ist.

3. Werkzeug nach einem der vorhergehenden Ansprüche, **dadurch gekennzeichnet, dass** im Bereich der Freistelle (11) der wenigstens einen Führungsfase (10) zumindest eine Führungsfase (8) entlang der Längsachse ausgebildet ist.

4. Werkzeug nach einem der vorhergehenden Ansprüche, **dadurch gekennzeichnet, dass** in einem Bereich d, in welchem wenigstens zwei Führungsfasen (8, 10) entlang der Längsachse des Werkzeugs vorgesehen sind, diese Führungsfasen (8, 10) parallel verlaufen.

5. Werkzeug nach einem der vorhergehenden Ansprüche, **dadurch gekennzeichnet, dass** wenigstens eine Führungsfase (8) an einem Ende (3a) der Hauptschneide (3) beginnt.

6. Werkzeug nach einem der vorhergehenden Ansprüche, **dadurch gekennzeichnet, dass** die wenigstens eine Führungsfase (10) nach der Freistelle (11) über eine Schrägfläche bezogen eine Ebene senkrecht zur Längsmittelachse des Werkzeugs (1) beginnt.

7. Bohrwerkzeug mit einer Ausgestaltung nach einem der vorhergehenden Ansprüche.

## Claims

1. Tool (1) having a rotating body for a chip-removing process having at least one main cutting edge (3) close to the leading tool tip and one trailing edge (6) spiraling around and along the longitudinal axis of the tool body with a spiral flute (7) in front of it in cutting direction whereby in counter direction from behind the trailing edge (6) up to another spiral flute (7) follow at least two guiding chamfers (8, 10) whereby at least one guiding chamfer (10, as viewed from the leading point of the tool body) is not created as continuous chamfer from the leading area of the tool body to an area farther up the longitudinal axis of the tool body but rather forms a gap (11) in the guiding chamfer with at least one gap area where the chamfer is interrupted **characterized in that** the length 1 of the gap (11) is larger than half the diameter of the tool (1) body and preferentially is larger than the tool (1) diameter whereby viewed in circumferential direction the first guiding chamfer (8) after the trailing cutting edge (6) is wider than the following guiding chamfer (10).

2. Tool according to one of the above claims **characterized in that** the length 1 of the gap (11) is 1.5-fold but preferentially 2-fold larger than the tool (1) diameter.

3. Tool according to one of the above claims **characterized in that** the gap (11) in at least one of two guiding chamfers (8 of 8 and 10) is formed along the longitudinal tool (1) axis.

4. Tool according to one of the above claims **characterized in that** in an area 'd', which is designed to have at least two guiding chamfers (8, 10) along the longitudinal tool (1) axis, these guiding chamfers (8, 10) run parallel.

5. Tool according to one of the above claims **characterized in that** at least one guiding chamfer (8) begins at one end (3 a) of the main cutting edge (3).

6. Tool according to one of the above claims **characterized in that** the at least one guiding chamfer (10) after the gap (11) is chamfered to start forming in the plane running vertically to the longitudinal tool (1) axis.

7. Drill and drilling equipment designed according to one of the above claims.

## Revendications

1. Outil (1) pour l'usinage rotatif avec enlèvement de copeaux avec un corps de base avec au moins une lame principale (3) dans une zone frontale et au moins une lame secondaire (6) le long d'un pourtour externe du corps de base et devant laquelle se trouve une rainure à copeaux (7) orientée dans le sens de la coupe et où il y a, en sens opposé à la coupe derrière la lame secondaire (6) jusqu'à une autre rainure à copeaux (7) au moins deux chanfreins de guidage (8, 10), où au moins un chanfrein de guidage (10) des deux chanfreins de guidage (8, 10) vu à partir du côté frontal de l'outil n'est pas ininterrompu sur une transition entre la partie frontale et le pourtour le long de l'axe longitudinal, mais présente un espace entre la transition de la zone frontale et la zone du contour le long de l'axe longitudinal, mais il y a, entre la transition et la suite un autre espace (11) dans le chanfrein de guidage dans lequel au moins un chanfrein de guidage n'est pas prévu, **caractérisé par le fait qu'**une longueur 1 de l'espace (11) est plus grand que la moitié du diamètre de l'outil (1), où, vu dans le sens du pourtour un premier chanfrein de guidage (8) après la lame secondaire (6) est plus large qu'un chanfrein de guidage (10) suivant.

2. Outil correspondant à l'une des revendications précédentes, **caractérisé par le fait qu'**une longueur 1 de l'espace (11) est supérieure à 1,5 fois le diamètre, de préférence le double du diamètre de l'outil (1).

3. Outil correspondant à l'une des revendications précédentes, **caractérisé par le fait qu'**au niveau de l'espace (11) de l'un de chanfrein de guidage (10) se trouve au moins un chanfrein de guidage (8) le long de l'axe longitudinal.

4. Outil correspondant à l'une des revendications précédentes, **caractérisé par le fait que** dans une zone d, où sont prévus au moins deux chanfreins de guidage (8, 10) le long de l'axe longitudinal de l'outil, ces chanfreins de guidage (8, 10) sont parallèles.

5. Outil correspondant à l'une des revendications précédentes, **caractérisé par le fait qu'**au moins l'un des chanfreins de guidage (8) commence à une extrémité (3a) de la lame principale(3).

6. Outil correspondant à l'une des revendications précédentes, **caractérisé par le fait qu'**au moins l'un des chanfreins de guidage (10) commence après l'espace (11) sur une surface inclinée par rapport à un plan perpendiculaire à l'axe longitudinale de l'outil (1).

7. Outil à percer avec une configuration correspondant à l'une des précédentes revendications.
